# DEMANDE DE BREVET EUROPEEN

(11) **EP 0 979 630 A1**
(43) Date de publication de la demande: **16.02.2000**
(21) Numéro de dépôt: 99410096.4
(22) Date de dépôt: 12.08.1999
(51) Int. Cl.: A47J 43/25

(54) **Dispositif pour râper manuellement du fromage**

(30) Priorité: 13.08.1998 FR 9810479
(71) Demandeur: Rungette, Marcel, 26190 La Motte Fanjas (FR)
(72) Inventeur: Rungette, Marcel, 26190 La Motte Fanjas (FR)
(74) Mandataire: Hecké, Gérard

(57) **Abrégé**

Dispositif pour râper manuellement du fromage, comprenant :
- une râpe 3 cylindrique rotative équipée de gouges 25 internes, et solidarisée à un fond 1 pour délimiter un compartiment 30 de réception des morceaux de fromage à râper, ladite râpe ayant un diamètre supérieur à sa hauteur,
- des organes d'entraînement manuel en rotation du fond 1 pour assurer le rapâge du fromage,
- un couvercle 11 recouvrant la râpe 3 à l'opposé du fond 1, et susceptible d'être maintenu par l'autre main de l'utilisateur,
- des moyens déflecteurs 16 agencés en poussoir pour solliciter les morceaux de fromage contre les gouges 25 de la râpe 3,
- et des moyens de raclage 19 situés dans la zone de fuite de la râpe 3 pour éviter l'engorgement des vermicelles de fromage sur la face extérieure de la râpe.

## Description

### Domaine technique de l'invention

L'invention est relative à un dispositif pour râper manuellement du fromage, comprenant un moulin équipé d'une râpe à gouges.

### Etat de la technique

Le rapâge du fromage est généralement effectué au moyen d'un moulin à râper actionné par un moteur ( voir documents US-A- 5364037, DE-A-3903635) ou manuellement par l'intermédiaire d'une manivelle de manoeuvre ( voir documents FR-A-998911, CH-A-595820). La râpe est conformée selon un cylindre, et coopère avec un poussoir extérieur destiné à appliquer les morceaux de fromage contre les gouges, lesquelles sont situées à l'extérieur du cylindre. Les vermicelles de fromage râpé se forment dans ce cas à l'intérieur du cylindre.

### Objet de l'invention

L'objet de l'invention consiste à réaliser un dispositif manuel pour râper du fromage, pratique à l'usage, et facilement démontable pour le nettoyage de l'intérieur.

Le dispositif selon l'invention est caractérisé en ce qu'il comporte :
- une râpe cylindrique rotative équipée de gouges internes, et solidarisée à un fond pour délimiter un compartiment de réception des morceaux de fromage à râper, ladite râpe ayant un diamètre supérieur à sa hauteur,
- des organes d'entraînement manuel en rotation du fond pour assurer le rapâge du fromage,
- un couvercle recouvrant la râpe à l'opposé du fond, et susceptible d'être maintenu par l'autre main de l'utilisateur,
- des moyens déflecteurs agencés en poussoir pour solliciter les morceaux de fromage contre les gouges de la râpe,
- et des moyens de raclage situés dans la zone de fuite de la râpe pour éviter l'engorgement des vermicelles de fromage sur la face extérieure de la râpe.

Selon un premier mode de réalisation de l'invention, le couvercle est doté d'un axe central logé coaxialement dans un tube cylindrique du fond par des moyens d'accrochage, autorisant la rotation du fond par rapport au couvercle. Les moyens d'accrochage comportent un verrou à languette de verrouillage de l'extrémité inférieure de l'axe, et un écrou de serrage coopérant avec un embout fileté de l'extrémité supérieure de l'axe. Le couvercle est muni d'un ergot excentré destiné à stabiliser les moyens déflecteurs, lesquels possèdent une extrémité montée avec jeu sur le tube du fond, et une cloison incurvée en forme de volute. Le couvercle est muni d'un ergot excentré destiné à stabiliser les moyens déflecteurs, lesquels possèdent une extrémité montée avec jeu sur le tube du fond, et une cloison incurvée en forme de volute.

Selon un deuxième mode de réalisation de l'invention, le couvercle est équipé d'une pluralité de galets de roulement coopérant avec le bord de la râpe, et d'un système de clipsage à galets sphériques pour assurer le verrouillage du fond sur le couvercle. Le couvercle est doté d'un réservoir destiné à recevoir les morceaux de fromage à râper, ledit réservoir étant conformé selon un parallélépipède rectangle inscrit dans le volume interne de la râpe cylindrique. Un poussoir est susceptible de coulisser dans une rainure latérale du couvercle pour comprimer le fromage contre la râpe. Le poussoir possède une courbure convexe épousant la courbure concave de la râpe cylindrique pour obtenir un râpage total du fromage en fin de course du poussoir. Le fond est entraîné en rotation au moyen d'une manivelle de manoeuvre escamotée partiellement dans un logement dudit fond. Le couvercle comporte une échancrure latérale s'étendant dans le prolongement de la petite face ouverte du réservoir pour autoriser la chute du fromage râpé.

### Description sommaire des dessins

D'autres avantages et caractéristiques ressortiront plus clairement de la description qui va suivre d'un mode de réalisation de l'invention donné à titre d'exemple non limitatif, et représenté aux dessins annexés, dans lesquels:
- la figure 1 est vue en perspective éclatée du dispositif pour râper du fromage selon l'invention ;
- la figure 2 montre le dispositif de la figure 1 en état de marche ;
- la figure 3 représente une vue en coupe selon la ligne 3-3 de la figure 2 ;
- la figure 4 montre une vue en coupe partielle d'une variante de réalisation.

### Description d'un mode de réalisation préférentiel

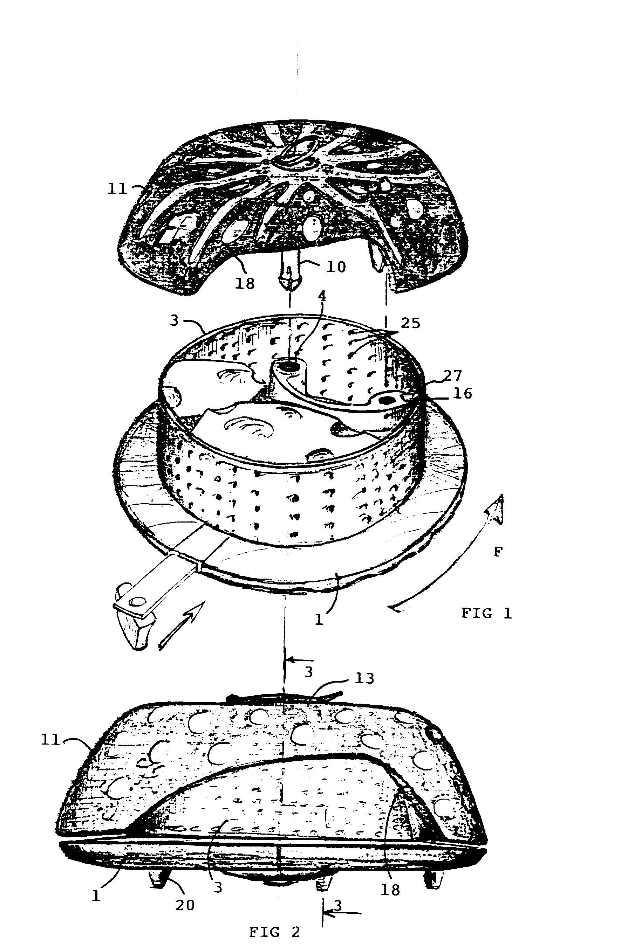

En référence aux figures 1 à 3, un dispositif pour râper manuellement du fromage comporte une râpe 3 cylindrique rotative solidarisée par une couronne 2 de fixation à la base d'un disque 34 en matière plastique pour délimiter un compartiment de réception des morceaux de fromage à râper. Le disque 34 comporte un trou central pour le passage d'un tube 4 cylindrique, et la surface latérale interne de la râpe 3 est équipée de gouges 25 pour râper le fromage.

L'ensemble râpe 3 et disque 34 est maintenu sur un fond 1 par l'intermédiaire d'ergots 35 constituant un pas de vis femelle et coopérant par vissage avec des épaulements 37 du disque 34 faisant office de filetage mâle. Des plots 20 sont fixés à la surface inférieure du fond 1 par des vis 36, pour servir à la fois d'éléments de support lorsque l'appareil est posé sur une table en fin d'opération de râpage, et d'éléments de préhension lors de la rotation de l'équipage mobile formé par le fond 1, le disque 34 et la râpe 3.

Le tube 4 creux amovible est doté d'une collerette 7 intercalée entre le disque 34 et le fond 1, et est traversé dans le sens de la hauteur par un axe 10 plein. L'extrémité supérieure de l'axe 10 comporte un embout fileté délimité par une collerette 12 et coopérant avec un écrou 13 de serrage, lequel possède un évidement 14 ergonomique et un anneau 15 escamotable de préhension. L'extrémité inférieure de l'axe 10 est maintenue par un verrou 21, comprenant une languette de verrouillage montée à coulissement dans un logement d'une rondelle 6 fixée au fond 1 par des vis 5. Un ressort de rappel 33 de la languette est positionné dans une lumière 39 de limitation de la course de coulissement.

La râpe 3 est surmontée d'un couvercle 11 solidaire de l'axe 10, et décalé du fond 1 par la hauteur de la râpe 3. Un racloir 19 souple est solidarisé au couvercle 11 par un organe de maintien 22, et s'étend sur toute la hauteur de la râpe 3 du côté de la surface extérieure. La présence du racloir 19 favorise le nettoyage de la râpe 3 en évitant l'enroulement des vermicelles sur la surface extérieure. Le couvercle 11 comporte une ouverture 18 ménagée sur la surface latérale pour permettre l'évacuation des vermicelles de fromage râpé après passage par les gouges 25.

Sur le tube 4 est monté par emmanchement un déflecteur 16 incurvé dans le sens de la courbure de la râpe 3 de manière à coincer les morceaux de fromage contre les gouges 25 réparties sur la surface interne de la râpe 3. La tenue du déflecteur 16 est assurée au moyen d'un ergot de retenue 17 excentré, lequel est solidaire du couvercle 11, et logé dans un anneau 28. L'extrémité du déflecteur 16 située au voisinage de la râpe 3 est pourvue d'un joint d'étanchéité 27 souple.

Le fonctionnement du dispositif des figures 1 à 3 est le suivant :

L'introduction des morceaux de fromage à l'intérieur de la râpe 3 cylindrique s'effectue après enlèvement du couvercle 11 ( figure 1). Le couvercle 11 est ensuite abaissé en introduisant l'axe 10 dans le tube 4, suivi du blocage de l'axe 10 par le verrou 21.

En position assemblée ( figure 2), le couvercle 11 est maintenu par la main gauche, et il suffit de faire tourner le fond 1 dans le sens de la flèche F avec la main droite pour obtenir la rotation de la râpe 3. Le fromage râpé traverse les gouges 25 et est évacué par l'ouverture 18 du couvercle 11.

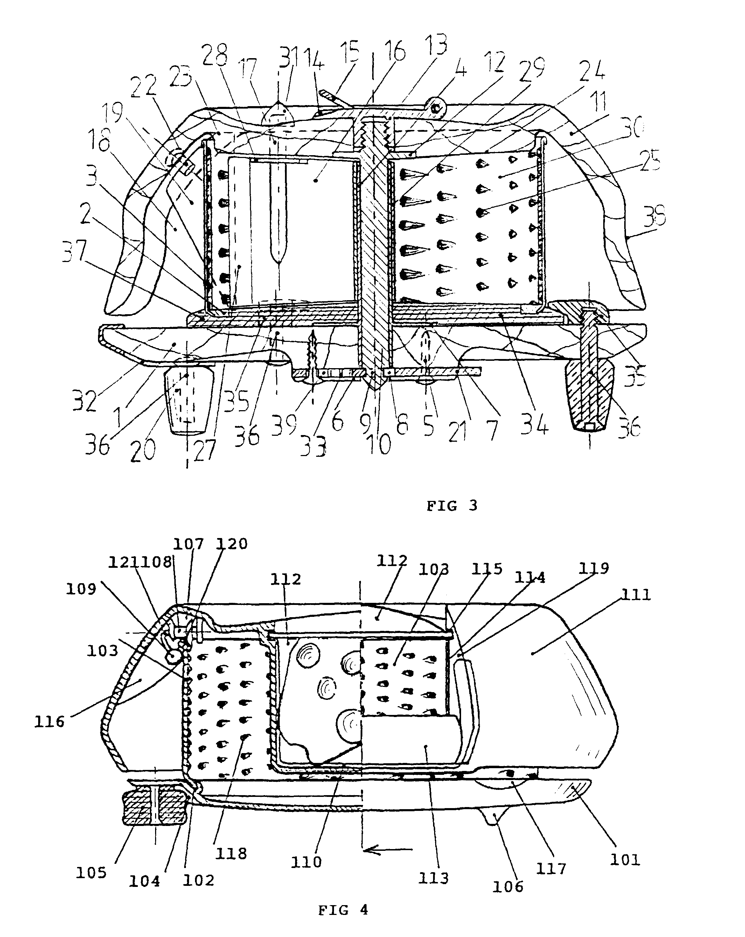

Sur la variante de la figure 4, le dispositif réalisé en plastique injecté, comporte un fond 101 doté d'une rainure 102 annulaire pour la fixation de la râpe 103 cylindrique. Une cavité 104 est ménagée dans le fond 101 pour escamoter partiellement la manivelle 105 de mise en rotation de l'ensemble fond 101 et râpe 103. Des bossages 106 sont également prévus pour constituer un trépied de pose.

Le couvercle 111 est équipé de trois évidements 107 angulairement espacés autour de la périphérie pour loger des galets de roulement 108 et de guidage du bord libre de la râpe 103 lors du mouvement de rotation. Des galets sphériques 109 assurent le verrouillage de l'ensemble fond 101 et râpe 103 sur le couvercle 111.

Un logement réservoir 110 est prévu dans la partie centrale du couvercle 111 pour la réception du fromage à râper, lequel est sollicité contre la râpe 103 à gouges internes 118 par un poussoir 112 actionné manuellement en coulissant dans au moins une rainure 115 latérale du couvercle 111 pour comprimer le fromage contre la râpe 103. Le poussoir 112 possède une courbure convexe épousant la courbure concave de la râpe 103 cylindrique pour obtenir un râpage total du fromage en fin de course du poussoir 112. Le couvercle 111 comporte une échancrure 119 latérale s'étendant dans le prolongement de la petite face ouverte du réservoir 110 pour autoriser la chute du fromage râpé.

Un joint racleur 114 est situé sur l'arête du réservoir au niveau de la fuite de la râpe 103 pour éviter l'engorgement par les vermicelles de fromage non tombées et entraînées par le mouvement de rotation.

## Revendications

1. Dispositif pour râper manuellement du fromage, caractérisé en ce qu'il comporte :
- une râpe (3, 103) cylindrique rotative équipée de gouges (25, 118) internes, et solidarisée à un fond (1, 101) pour délimiter un compartiment (30, 110) de réception des morceaux de fromage à râper, ladite râpe ayant un diamètre supérieur à sa hauteur,
- des organes d'entraînement manuel en rotation du fond (1, 101) pour assurer le rapâge du fromage,
- un couvercle (11, 111) recouvrant la râpe (3, 103) à l'opposé du fond (1, 101), et susceptible d'être maintenu par l'autre main de l'utilisateur,
- des moyens déflecteurs (16, 112) agencés en poussoir pour solliciter les morceaux de fromage contre les gouges (25, 118) de la râpe (3, 103),
- et des moyens de raclage (19, 119) situés dans la zone de fuite de la râpe (3, 103) pour éviter l'engorgement des vermicelles de fromage sur la face extérieure de la râpe.

2. Dispositif pour râper manuellement selon la revendication 1, caractérisé en ce que le couvercle (11) est doté d'un axe (10) central logé coaxialement dans un tube (4) cylindrique du fond (1) par des moyens d'accrochage, autorisant la rotation du fond (1) par rapport au couvercle (11).

3. Dispositif pour râper manuellement selon la revendication 2, caractérisé en ce que les moyens d'accrochage comportent un verrou (21) à languette de verrouillage de l'extrémité inférieure de l'axe (10), et un écrou (13) de serrage coopérant avec un embout fileté de l'extrémité supérieure de l'axe (10).

4. Dispositif pour râper manuellement selon la revendication 2, caractérisé en ce que le couvercle (11) est muni d'un ergot (17) excentré destiné à stabiliser les moyens déflecteurs (16), lesquels possèdent une extrémité montée avec jeu sur le tube (4) du fond (1), et une cloison incurvée en forme de volute.

5. Dispositif pour râper manuellement selon la revendication 1, caractérisé en ce que le couvercle (111) est équipé d'une pluralité de galets de roulement (108) coopérant avec le bord de la râpe (103), et d'un système de clipsage à galets (109) sphériques pour assurer le verrouillage du fond (101) sur le couvercle (111).

6. Dispositif pour râper manuellement selon la revendication 1, caractérisé en ce que le couvercle (111) est doté d'un réservoir (110) destiné à recevoir les morceaux de fromage à râper, ledit réservoir étant conformé selon un parallélépipède rectangle inscrit dans le volume interne de la râpe (103) cylindrique, et que les moyens déflecteurs comportent un poussoir (112) susceptible de coulisser dans au moins une rainure (115) latérale du couvercle (111) pour comprimer le fromage contre la râpe (103).

7. Dispositif pour râper manuellement selon la revendication 5, caractérisé en ce que le fond (101) est entraîné en rotation au moyen d'une manivelle (105) de manoeuvre escamotée partiellement dans un logement (104) dudit fond.

8. Dispositif pour râper manuellement selon la revendication 5, caractérisé en ce que le poussoir (112) possède une courbure convexe épousant la courbure concave de la râpe (103) cylindrique pour obtenir un râpage total du fromage en fin de course du poussoir (112).

9. Dispositif pour râper manuellement selon l'une des revendications 5 à 7, caractérisé en ce que le couvercle (111) comporte une échancrure (119) latérale s'étendant dans le prolongement de la petite face ouverte du réservoir (110) pour autoriser la chute du fromage râpé.
